# EUROPEAN PATENT APPLICATION

(11) **EP 4 826 987 A1**
(43) Date of publication of application: **21.10.2026**
(21) Application number: 24903466.1
(22) Date of filing: 22.11.2024
(51) Int. Cl.: H02P 23/04, H02P 27/08

(54) **MOTOR DRIVE DEVICE**

(30) Priority: 11.12.2023 JP 2023208475
(71) Applicant: Panasonic Corporation, Osaka 571-8501 (JP)
(72) Inventor: NISHIMURA, Seiichi, Kadoma-shi, Osaka 571-0057 (JP); FUKUDA, Mitsuhiro, Kadoma-shi, Osaka 571-0057 (JP)
(74) Representative: Eisenführ Speiser
(86) International application number: PCT/JP2024/041449
(87) International publication number: WO 2025/126807

(57) **Abstract**

A motor drive device includes an inverter circuit, a motor having a single phase or a plurality of phases, an arithmetic processor, and a PWM signal generator. The arithmetic processor calculates a drive voltage, and determines a first duty ratio of a PWM signal. The PWM signal generator converts the first duty ratio into the PWM signal at a carrier frequency, and outputs the PWM signal. The arithmetic processor: in a case where the motor has a single phase, selects the single phase and irregularly selects at least one PWM cycle for the single phase, whereas in a case where the motor has a plurality of phases, irregularly selects at least one phase from among the plurality of phases, and irregularly selects at least one PWM cycle for the selected phase; calculates a specified value for increasing or decreasing the first duty ratio; and sets a duty ratio of the PWM signal in the selected PWM cycle in the selected phase to a second duty ratio that is determined by increasing or decreasing the first duty ratio by the specified value. According to this configuration, the motor drive device can reduce a peak value of noise attributable to the carrier frequency and can be easily implemented even with an inexpensive microcomputer having a low processing speed.

## Description

### Technical Field

The present disclosure relates to a motor drive device for use in various refrigerator-freezer equipment.

### Background Art

Patent Literature 1 discloses a PWM inverter or a control method therefor, the object of which is to reduce audible noise without increasing loss and to ensure stable control performance.

Specifically, Patent Literature 1 discloses a PWM inverter configured such that two switching means, each including a switching element and a diode connected in antiparallel with the switching element, are connected in series, with a connection point therebetween serving as an output terminal, to form single-phase switching means. A plurality of such single-phase switching means are connected in parallel to form multiphase switching means. A DC power supply is connected to both ends of the multiphase switching means, and a load is connected to multiphase output terminals thereof, thereby enabling control of a voltage applied to the load. The PWM inverter further includes carrier frequency varying means for varying a carrier frequency within a predetermined frequency range centered on an arbitrary carrier frequency.

### Citation List

### Patent Literature

PTL 1: Japanese Laid-Open Patent Application Publication No. 2007-20320

### Summary of Invention

### Technical Problem

In the PWM inverter disclosed in Patent Literature 1, the carrier frequency is varied within the predetermined frequency range centered on the aforementioned arbitrary carrier frequency, thereby dispersing specific frequency components attributable to the carrier frequency. However, varying the carrier frequency has been difficult to realize with an inexpensive microcomputer having a low processing speed.

An object of the present disclosure is to provide a motor drive device that reduces a peak value of noise attributable to a carrier frequency and that can be easily implemented even with an inexpensive microcomputer having a low processing speed.

### Solution to Problem

In order to solve the above-described problems, a motor drive device according to the present disclosure includes: an inverter circuit that converts a direct current into an alternating current; a motor connected to the inverter circuit, the motor having a single phase or a plurality of phases; an arithmetic processor; and a PWM signal generator. The arithmetic processor calculates a drive voltage for driving the motor, and determines a first duty ratio of a PWM signal. The PWM signal generator converts the first duty ratio calculated by the arithmetic processor into the PWM signal at a carrier frequency, and outputs the PWM signal. The arithmetic processor: in a case where the motor has a single phase, selects the single phase and irregularly selects at least one PWM cycle for the single phase, whereas in a case where the motor has a plurality of phases, irregularly selects at least one phase from among the plurality of phases, and irregularly selects at least one PWM cycle for the selected phase; calculates a specified value for increasing or decreasing the first duty ratio; and sets a duty ratio of the PWM signal in the selected PWM cycle in the selected phase to a second duty ratio that is determined by increasing or decreasing the first duty ratio by the specified value. The PWM signal generator converts the second duty ratio into the PWM signal, and outputs the PWM signal.

According to the above configuration, the regularity of the PWM signal is disrupted, and therefore frequency components of a carrier frequency different from a specific carrier frequency are applied to the motor. In this manner, the frequency components of the carrier frequency are dispersed. Therefore, a peak value of noise in the frequency band of the carrier frequency can be reduced. In addition, according to the above configuration, even when the carrier frequency dispersion control is performed, there is no need to change the cycles of other controls. Therefore, the control according to the present embodiment can be easily implemented even with an inexpensive microcomputer having a low processing speed.

The above and other objects, features, and advantages of the present invention will more fully be apparent from the following detailed description of preferred embodiments with accompanying drawings.

### Advantageous Effects of Invention

The present disclosure, owing to the above-described configuration, has an advantage of making it possible to provide a motor drive device that reduces a peak value of noise attributable to a carrier frequency and that can be easily implemented even with an inexpensive microcomputer having a low processing speed.

### Brief Description of Drawings

FIG. 1 a block diagram showing a representative configuration example of a motor drive device according to an embodiment of the present disclosure.
FIG. 2 is a timing chart showing one example in which a duty ratio is increased or decreased in one PWM cycle in one phase in the motor drive device of FIG. 1.
FIG. 3 is a timing chart showing one example in which an increase or decrease in duty ratio in a PWM cycle in the motor drive device of FIG. 1 is schematically illustrated.
FIG. 4 is a flowchart showing one example of control of increasing or decreasing the duty ratio in one PWM cycle or in each of a plurality of PWM cycles in one phase or in each of a plurality of phases irregularly selected in the motor drive device of FIG. 1.
FIG. 5 is a timing chart showing one example in which, in the motor drive device of FIG. 1, the duty ratio in one PWM cycle in each of all three phases is increased or decreased by the same value common for all the phases.
FIG. 6 is a flowchart showing one example of control of increasing or decreasing, by the same value common for all the phases, the duty ratio in one PWM cycle or in each of a plurality of PWM cycles irregularly selected in the motor drive device of FIG. 1.
FIG. 7 shows, for the motor drive device of FIG. 1, a comparison of a graph schematically showing one example of noise distribution around a motor carrier frequency in a case where duty ratio increase/decrease control is performed and a graph schematically showing one example of noise distribution around the motor carrier frequency in a case where the duty ratio increase/decrease control is not performed.
FIG. 8 shows, for the motor drive device of FIG. 1, a comparison of a graph showing one example of actual measurement of noise around a motor carrier frequency in a case where duty ratio increase/decrease control is performed and a graph showing one example of actual measurement of noise around the motor carrier frequency in a case where the duty ratio increase/decrease control is not performed.

### Description of Embodiments

### (Findings and so forth on which the present disclosure is based)

At the time the inventors arrived at the present disclosure, as ways to suppress a peak value of noise attributable to the carrier frequency of an inverter, techniques were known in which, for example, as disclosed in the aforementioned Patent Literature 1, the carrier frequency was varied within a predetermined frequency range centered on an arbitrary carrier frequency to disperse specific frequency components.

However, varying the carrier frequency requires setting a plurality of consecutive carrier frequencies, which tends to increase the complexity of arithmetic processing and control. Therefore, a configuration for varying the carrier frequency has been difficult to realize with an inexpensive microcomputer having a low processing speed.

In addition, switching among a plurality of consecutive carrier frequencies tends to be performed in a predetermined regular sequence. Accordingly, it has also been found that such regular switching results in noise reduction at fixed timings, making it difficult to achieve effective noise reduction.

The present inventors identified these problems, and arrived at the subject matter of the present disclosure in order to solve the problems.

In view of the above, the present disclosure provides a motor drive device that reduces a peak value of noise attributable to a carrier frequency and that can be easily implemented even with an inexpensive microcomputer having a low processing speed.

Hereinafter, embodiments are described in detail with reference to the drawings. In the embodiments described below, a description that is more detailed than necessary is omitted in some cases. For example, detailed descriptions of well-known matters or redundant descriptions of substantially identical components are omitted in some cases. These omissions are made to avoid unnecessary redundancy in the description below and to allow those skilled in the art to readily understand the embodiments. In the drawings, the same or corresponding elements are denoted by the same reference signs, and repeating the same descriptions is avoided below.

It should be noted that the accompanying drawings and the description below are provided to allow those skilled in the art to understand the present disclosure sufficiently, and the accompanying drawings and the description below are not intended to limit subject matters described in the claims.

### [1. Configuration Example of Motor Drive Device]

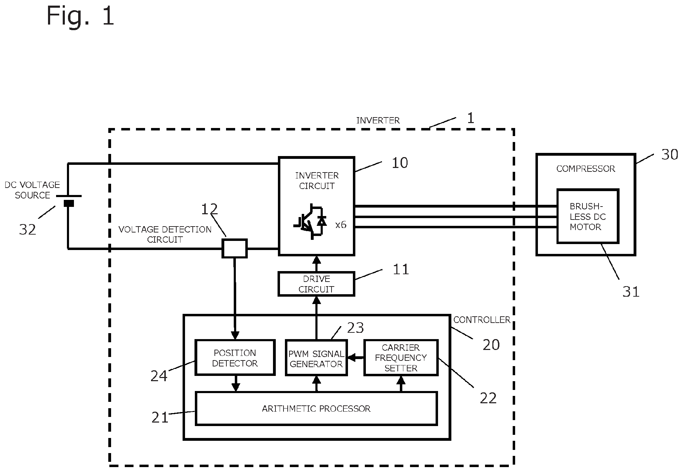

A representative configuration example of a motor drive device according to the present disclosure is described with reference to FIG. 1. For example, as shown in FIG. 1, the motor drive device according to the present embodiment includes an inverter 1 and a compressor 30. Specifically, in the present embodiment, a motor (electric motor) to be driven by the motor drive device according to the present disclosure is, as shown in FIG. 1, a brushless DC motor 31 included in the compressor 30.

In the present embodiment, the inverter 1 includes an inverter circuit 10, a drive circuit 11, a current detection circuit 12, and a controller 20. In the present embodiment, the controller 20 includes an arithmetic processor 21, a carrier frequency setter 22, a PWM signal generator 23, and a position detector 24.

The inverter circuit 10 outputs a signal for driving the brushless DC motor 31 included in the compressor 30. The inverter circuit 10 is, for example, a circuit including drive elements such as IGBTs (Insulated Gate Bipolar Transistors) or FETs (Field Effect Transistors).

The drive circuit 11 converts a signal outputted from the controller 20 into a signal suitable for the inverter circuit 10. It should be noted that the drive circuit 11 may include a built-in protection circuit, such as one for overcurrent protection. The current detection circuit 12 periodically obtains an electric current value (circuit current) from the inverter circuit 10, and outputs the obtained electric current value to the position detector 24 of the controller 20.

The controller 20 controls driving of the compressor 30 via the inverter circuit 10. The controller 20 may also be configured to perform various types of control, other than the control of driving of the compressor 30, in accordance with a specific configuration of the motor drive device.

The arithmetic processor 21 performs various arithmetic processing associated with control performed by the controller 20. Specific examples of the arithmetic processing include, as described below, calculating a voltage command value (drive voltage) for driving the compressor 30 and outputting it as the duty ratio of a PWM signal.

The carrier frequency setter 22 sets a carrier frequency for driving the compressor 30. The PWM signal generator 23 converts the duty ratio outputted from the arithmetic processor 21 into a PWM signal. The position detector 24 estimates the rotor position of the brushless DC motor 31 based on the circuit current detected by the current detection circuit 12. The estimated rotor position is used in arithmetic processing by the arithmetic processor 21. That is, the arithmetic processor 21 calculates a voltage command value suitable for driving the motor based on the estimated rotor position, and outputs the calculated voltage command value as the duty ratio of the PWM signal as mentioned above.

In the description herein, the specific configuration of the controller 20, and the configurations of components included in the controller 20, such as the arithmetic processor 21, the carrier frequency setter 22, the PWM signal generator 23, and the position detector 24, are not particularly limited. For example, the controller 20 described in the present embodiment may be realized by, e.g., an arithmetic processing device and a storage device of a microcomputer or microcontroller.

The storage device included in the controller 20 may be configured as an internal memory of a microcomputer or microcontroller, or may be configured as an independent memory or storage. The storage device need not be a single device, and may be configured as a plurality of storage devices (e.g., as an internal memory and an external hard disk drive or SSD (Solid State Drive)).

The arithmetic processing device included in the controller 20 may include one of or a combination of two or more of, for example, a general-purpose processor, a dedicated processor, an integrated circuit, an FPGA (Field Programmable Gate Array), an ASIC (Application Specific Integrated Circuit), and a GPU. The arithmetic processing device included in the controller 20 may be configured to operate, in accordance with a program stored in the storage device, to realize functions of the controller 20.

Since a processor serving as the arithmetic processing device includes circuits formed by a large number of transistors, memories, and so forth, the processor is a hardware circuit (or a processing circuit). Similarly, an integrated circuit or an ASIC includes, for example, a processor such as a CPU or a processing block, and is therefore a hardware circuit. An FPGA includes a large number of integrated logic circuits (functional blocks), and is therefore a hardware circuit. A GPU includes a large number of arithmetic circuits (cores) arranged in parallel, and is therefore a hardware circuit. Software such as a program stored in the storage device is used to configure hardware circuits (such as a processor, an integrated circuit, an FPGA, an ASIC, and a GPU). Alternatively, the arithmetic processing device may be configured as, for example, a logic circuit including known switching elements, subtractors, comparators, and so forth.

Also, specific configurations of the inverter circuit 10, the drive circuit 11, the current detection circuit 12, and the like described in the present embodiment are not particularly limited, and known configurations may be suitably used. For example, as described above, the inverter circuit 10 may be a circuit including, for example, IGBTs or FETs as switching elements (drive elements).

The inverter 1 configured as described above is connected to the compressor 30 by wire(s) of at least one phase. The inverter 1 is supplied with a voltage from a DC voltage source 32. The compressor 30 includes the brushless DC motor 31. The brushless DC motor 31 is driven by a voltage signal outputted from the inverter circuit 10 of the inverter 1. Examples of a specific driving method include two-phase modulation control and three-phase modulation control in which control is performed by sinusoidal current application.

### [2. Operation of Motor Drive Device]

Hereinafter, operations of the motor drive device (specifically the inverter 1 and the compressor 30) configured as described above are described.

### [2-1. Fundamental Operation ]

Hereinafter, operations of the inverter 1 are described with reference to FIG. 1. During rotation of the brushless DC motor 31, back electromotive force is generated due to the rotation. The back electromotive force serves as information for estimating the rotor position of the brushless DC motor 31. A circuit current value of the inverter circuit 10, the circuit current value containing the back electromotive force information, is obtained by the current detection circuit 12 and inputted to the position detector 24.

As previously described, the position detector 24 estimates the rotor position of the brushless DC motor 31. The arithmetic processor 21 calculates, based on the estimated rotor position, a voltage command value suitable for driving the motor, and outputs the calculated voltage command value as the duty ratio of the PWM signal. The PWM signal generator 23 converts the duty ratio into a PWM signal (i.e., generates a PWM signal).

The carrier frequency when the PWM signal generator 23 generates the PWM signal is a frequency set by the carrier frequency setter 22. The carrier frequency is determined based on a setting from the arithmetic processor 21. Usually, the carrier frequency is determined by comprehensively considering switching losses in the drive elements, noise, controllability, and so forth. In the present embodiment, priority is given to reduction of losses in the drive elements, and the carrier frequency is set to a relatively low frequency, for example, 1.5 kHz.

A control voltage mainly used in the inverter circuit 10 is neither 3.3 V nor 5 V used in the controller 20, but 15 V. In addition, in order to drive high-side drive elements in the inverter circuit 10, voltage conversion using a bootstrap circuit or the like is required.

Accordingly, the drive circuit 11 is provided between the controller 20 and the inverter circuit 10, and signal conversion is performed by the drive circuit 11. It should be noted that the drive circuit 11 may include a built-in protection circuit, such as one for overcurrent protection. The brushless DC motor 31 is driven by a voltage signal outputted from the inverter circuit 10. As a result, the brushless DC motor 31 continues rotating.

In the motor drive device according to the present disclosure, as previously described, the arithmetic processor 21 calculates a drive voltage for driving the brushless DC motor 31, and determines the duty ratio of a PWM signal. The PWM signal generator 23 generates the PWM signal based on the duty ratio. Further, the arithmetic processor 21 irregularly selects at least one PWM cycle in at least one phase among the phases of the brushless DC motor 31, and increases or decreases the duty ratio of the PWM signal in the selected PWM cycle. The PWM signal generator 23 converts the increased or decreased duty ratio into a PWM signal, and outputs the PWM signal.

As a result, the regularity of the PWM signal is disrupted, and therefore frequency components different from those of a specific carrier frequency are applied to the brushless DC motor 31. In this manner, frequency components during driving of the brushless DC motor 31 are dispersed. Therefore, a peak value of noise in the frequency band of the carrier frequency can be reduced.

Hereinafter, the operation of reducing a peak value of noise attributable to the carrier frequency in the motor drive device according to the present disclosure (i.e., carrier frequency dispersion operation) is described for the following two cases separately: a case where the arithmetic processor 21 selects only one phase and increases or decreases the duty ratio; and a case where the arithmetic processor 21 selects one cycle in each of a plurality of phases and increases or decreases the duty ratio.

It should be noted that, in the present disclosure, for the sake of convenience of the description, the duty ratio determined by the arithmetic processor 21 may be referred to as "first duty ratio" and the duty ratio that is obtained by increasing or decreasing the first duty ratio by the arithmetic processor 21 and that is intended to reduce the peak value of noise may be referred to as "second duty ratio".

### [2-2. Carrier Frequency Dispersion Operation 1 (for each phase)]

First, the operation of dispersing the frequency components of the carrier frequency by selecting one phase (or a plurality of phases) of a PWM signal, selecting at least one PWM cycle in the selected phase, and increasing or decreasing the duty ratio of the selected PWM cycle (Carrier Frequency Dispersion Operation 1) is described.

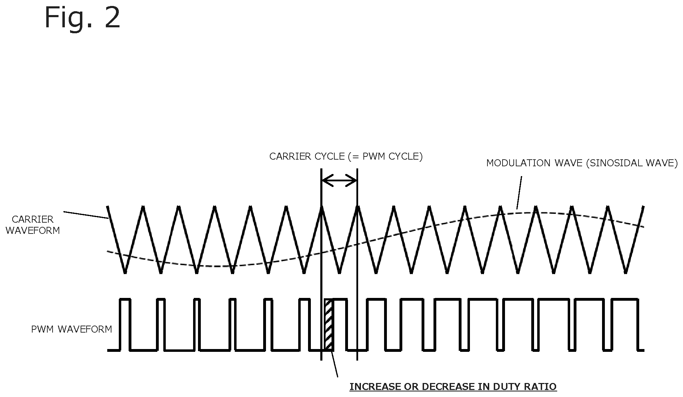

FIG. 2 shows one example in which the duty ratio is increased for one PWM cycle in one phase of the brushless DC motor 31. In the example shown in FIG. 2, a carrier waveform and a PWM waveform are illustrated for one phase irregularly selected by the arithmetic processor 21. In this example, a sinusoidal wave is used as a modulation wave, and a carrier signal is modulated by the modulation wave.

A phase for which the duty ratio is to be increased or decreased is irregularly selected from among the phases of the brushless DC motor 31. Examples of a method of selecting the phase include a method using an asynchronous counter and a method using a random function; however, the present disclosure is not particularly limited thereto. Similarly, the PWM cycle may be irregularly selected by a known method, and the selection method is not particularly limited.

In the example shown in FIG. 2, the seventh PWM cycle (carrier cycle) from the left in the illustrated PWM waveform is irregularly selected, and the duty ratio of the selected PWM cycle is increased. In FIG. 2, a region shaded with diagonal lines (diagonally shaded region) represents an increase in pulse width corresponding to the increase in duty ratio, and an unshaded region corresponds to the pulse width before the duty ratio is increased. Accordingly, in the selected one PWM cycle, the unshaded region represents the pulse width corresponding to the "first duty ratio" and a combined region of the unshaded region and the diagonally shaded region represents the pulse width corresponding to the "second duty ratio".

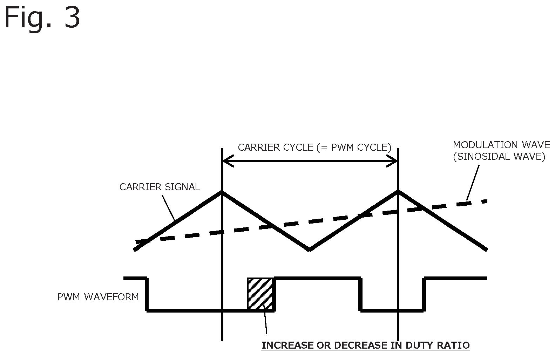

Regarding an increase or decrease in the duty ratio in the PWM cycle, more detailed illustration is shown in FIG. 3. As shown in FIG. 3, the PWM waveform is determined based on a magnitude comparison between the carrier signal and the modulation wave. For the determined PWM waveform, the arithmetic processor 21 increases or decreases the duty ratio within the selected PWM cycle. Similar to FIG. 2, also in FIG. 3, the unshaded region represents the pulse width corresponding to the "first duty ratio" and a combined region of the unshaded region and the diagonally shaded region represents the pulse width corresponding to the "second duty ratio".

Examples of a method of increasing or decreasing the duty ratio include a method in which the duty ratio is increased or decreased by a fixed value, a method in which an increase or decrease in the duty ratio is calculated based on the current value, a method in which a numerical value is determined using an asynchronous counter, and a method using a random function. However, the method of increasing or decreasing the duty ratio is not particularly limited. It should be noted that the duty ratio is increased or decreased without exceeding the upper limit or falling below the lower limit of the duty ratio.

It should be noted that, in the examples shown in FIG. 2 and FIG. 3, the duty ratio is increased or decreased at the leading edge of the High period of the PWM waveform. However, the position at which the duty ratio is increased or decreased is not limited thereto. The duty ratio may be increased or decreased at the trailing edge of the High period of the PWM waveform, or such changes in the duty ratio may be made at both the leading and trailing edges, i.e. in a distributed manner. In the examples shown in FIG. 2 and FIG. 3, a case where the duty ratio is increased is illustrated (the pulse width corresponding to the first duty ratio is smaller than the pulse width corresponding to the second duty ratio). Further, in the generation of the PWM waveform, the present embodiment uses a simple comparison method; however, other methods, such as space vector modulation or the intermediate voltage half-addition method, may also be used.

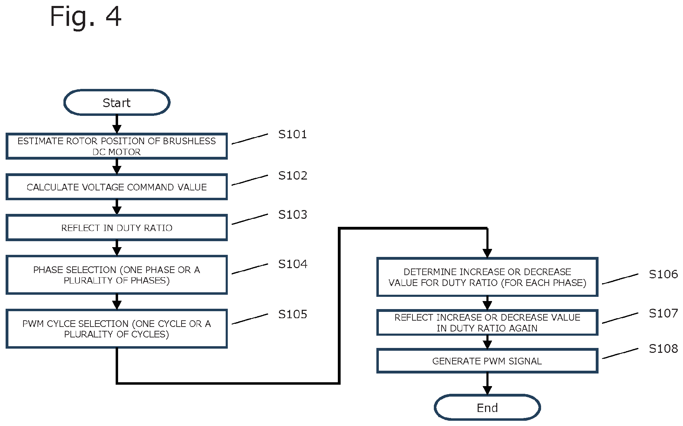

As described above, control is performed in which: one phase or two or more phases are selected; at least one PWM cycle of each selected phase is selected; and the duty ratio of the selected PWM cycle is increased or decreased. FIG. 4 shows one specific example of the control.

First, as previously described, the current detection circuit 12 obtains an electric current value (circuit current) from the inverter circuit 10, and outputs the obtained electric current value to the position detector 24 of the controller 20. In the controller 20, the position detector 24 estimates the rotor position of the brushless DC motor 31 from the electric current value (step S101).

The arithmetic processor 21 of the controller 20 calculates a voltage command value (a drive voltage) based on the estimated rotor position of the brushless DC motor 31 (step S102). The controller 20 reflects the calculated voltage command value in the duty ratio (step S103). That is, based on the calculated drive voltage, the arithmetic processor 21 of the controller 20 determines the first duty ratio of a PWM signal.

When the arithmetic processor 21 outputs the first duty ratio, the controller 20 selects one phase or a plurality of phases from among the phases of the brushless DC motor 31 (step S104), and in each of the selected one or plurality of phases, irregularly selects one PWM cycle or a plurality of PWM cycles (step S105). Subsequently, the arithmetic processor 21 calculates a specific value for increasing or decreasing the first duty ratio, thereby determining an increase or decrease value for the first duty ratio calculated in advance (step S106). It should be noted that the increase or decrease value is determined (in step S106) for each selected phase.

The controller 20 reflects the determined increase or decrease value in the first duty ratio (step S107). Specifically, the arithmetic processor 21 of the controller 20 sets the duty ratio in the selected PWM cycle (carrier cycle) in the selected phase to a second duty ratio. The second duty ratio is determined by increasing or decreasing, by a specified value (i.e., based on the increase or decrease value), the first duty ratio calculated in advance (in steps S102 to S103). Then, the arithmetic processor 21 outputs the second duty ratio to the PWM signal generator 23 as a voltage command.

Based on the voltage command, the PWM signal generator 23 generates a PWM signal containing a PWM cycle in which the second duty ratio is reflected (step S108). The generated PWM signal passes through the drive circuit 11 and the inverter circuit 10 to be converted into a voltage signal for driving the brushless DC motor 31. As a result, the brushless DC motor 31 continues rotating.

As described above, in the motor drive device according to the present disclosure, as the carrier frequency dispersion operation, the arithmetic processor 21 of the controller 20 may adopt the operation including: irregularly selecting at least one phase from among the phases of the brushless DC motor 31; irregularly selecting at least one PWM cycle of the selected phase; and setting the duty ratio of the PWM signal in the selected PWM cycle of the selected phase to the second duty ratio, which has been increased or decreased from the first duty ratio by a specified value.

### [2-3. Carrier Frequency Dispersion Operation 2 (for all phases, increase or decrease by the same value)]

Next, the operation of dispersing the frequency components of the carrier frequency by selecting all the phases of a PWM signal and increasing or decreasing, by the same value, the duty ratio of a PWM cycle selected in each of all the selected phases (Carrier Frequency Dispersion Operation 2) is described.

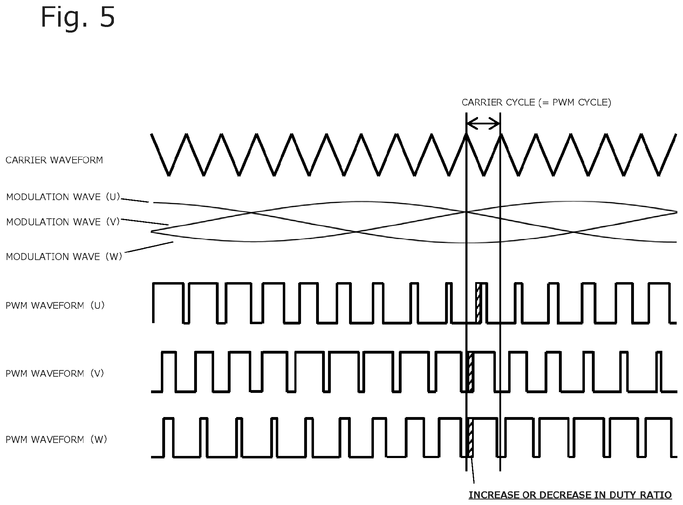

FIG. 5 shows one example in which, in a case where the brushless DC motor 31 is a three-phase motor of a U-phase, a V-phase, and a W-phase, one PWM cycle is irregularly selected in each of the three phases, and the duty ratio of the selected PWM cycle in each phase is increased by the same value. The example shown in FIG. 5 illustrates a carrier waveform, modulation waves for all the three phases, and PWM waveforms for all the three phases. Also in the example shown in FIG. 5, sinusoidal waves are used as the respective modulation waves, and a carrier signal is modulated by each of the modulation waves.

In the example shown in FIG. 5, the tenth PWM cycle (carrier cycle) from the left in each illustrated PWM waveform is irregularly selected, and in each of the three phases U, V, and W, the duty ratio of the selected PWM cycle is increased by the same value.

It should be noted that, also in FIG. 5, similar to FIG. 2 and FIG. 3, in each of the U-phase, V-phase, and W-phase, a diagonally shaded region represents an increase in pulse width corresponding to the increase in duty ratio, and an unshaded region corresponds to the pulse width before the duty ratio is increased. Accordingly, in each of the three phases, in the selected PWM cycle, the unshaded region represents the pulse width corresponding to the "first duty ratio" and a combined region of the unshaded region and the diagonally shaded region represents the pulse width corresponding to the "second duty ratio".

In the example shown in FIG. 5, in the selected PWM cycle (carrier cycle), the first duty ratio of the U-phase, the first duty ratio of the V-phase, and the first duty ratio of the W-phase are small values in this order, with the first duty ratio of the U-phase being the smallest. The same increase value is reflected in each of the first duty ratios of the respective three phases although the first duty ratios of the respective three phases are different from each other.

As described above, in the present disclosure, in each of all the phases, within at least one selected PWM cycle, i.e., within at least one selected carrier cycle, the duty ratio of the PWM waveform can be increased or decreased by the same value. It should be noted that a method of increasing or decreasing the duty ratio is not particularly limited, but may be, for example, a method in which the duty ratio is increased or decreased by a fixed value, a method in which an increase or decrease in the duty ratio is calculated based on the current value, a method in which a numerical value is determined using an asynchronous counter, or a method using a random function.

Hereinafter, one representative example of a method of increasing or decreasing the duty ratio is described. In the present embodiment, a method of calculating an increase or decrease value for the duty ratio based on the current value is described as one example. Voltage command values for the respective three phases, i.e., duty ratios, calculated by the arithmetic processor 21 are, for example, as follows.
U-phase = 20%
V-phase = 60%
W-phase = 70%

In the case of increasing a duty ratio, an increase is made so that the duty ratio will not exceed 100%. In the case of adding the same value to the duty ratios of all the phases, if the duty ratio of the phase having the greatest duty ratio does not exceed 100% as a result of the addition, then the duty ratios of the remaining phases will also not exceed 100% as a result of the addition. Therefore, a value to be added is calculated with reference to the phase having the greatest duty ratio.

In the example shown in FIG. 5, the phase having the greatest duty ratio is the W-phase, and the value of the duty ratio of the W-phase is 70%. In this example, an increase value is 1/2 of the difference up to the duty ratio of 100% (the difference being 100% - 70% = 30%). In this case, an increase value for the duty ratio (i.e., specified value) is as follows. $\left(100-70\right) \times \left(1/2\right) = 15$

When the specified value is 15 as above, the arithmetic processor 21 increases the duty ratio of each phase by 15. Consequently, the re-calculated duty ratios of the respective phases are as shown below.
U-phase = 35%
V-phase = 75%
W-phase = 85%

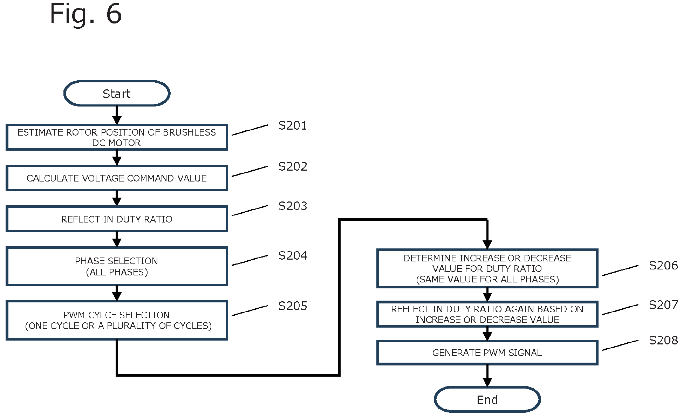

As described above, control is performed in which, for each of all the phases of the brushless DC motor 31, at least one PWM cycle is selected, and the duty ratio of the selected PWM cycle is increased or decreased. FIG. 6 shows one specific example of the control.

First, as previously described, the current detection circuit 12 obtains an electric current value (circuit current) from the inverter circuit 10, and outputs the obtained electric current value to the position detector 24 of the controller 20. In the controller 20, the position detector 24 estimates the rotor position of the brushless DC motor 31 from the electric current value (step S201).

The arithmetic processor 21 of the controller 20 calculates a voltage command value (a drive voltage) based on the estimated rotor position of the brushless DC motor 31 (step S202). The controller 20 reflects the calculated voltage command value in the duty ratio (step S203). That is, based on the calculated drive voltage, the arithmetic processor 21 of the controller 20 determines the first duty ratio of a PWM signal.

When the arithmetic processor 21 outputs the first duty ratio, the controller 20 selects all the phases of the brushless DC motor 31 (step S204), and in each of all the phases, irregularly selects one PWM cycle or a plurality of PWM cycles (step S205). Subsequently, the arithmetic processor 21 calculates a specific value for increasing or decreasing the first duty ratio, thereby determining an increase or decrease value for the first duty ratio calculated in advance (step S206). At the time, the same value (the same increase or decrease value, the same specified value) is determined for each phase.

The controller 20 reflects the determined same increase or decrease value in the first duty ratio of each phase (step S207). Specifically, the arithmetic processor 21 of the controller 20 sets the duty ratio in each PWM cycle (carrier cycle) selected in all the phases to a second duty ratio. The second duty ratio is determined by increasing or decreasing, by the specified value (i.e., based on the increase or decrease value), the first duty ratio calculated in advance (in steps S202 to S203). Then, the arithmetic processor 21 outputs the second duty ratio to the PWM signal generator 23 as a voltage command.

Based on the voltage command, the PWM signal generator 23 generates a PWM signal containing a PWM cycle in which the second duty ratio is reflected (step S208). The generated PWM signal passes through the drive circuit 11 and the inverter circuit 10 to be converted into a voltage signal for driving the brushless DC motor 31. As a result, the brushless DC motor 31 continues rotating.

As described above, in the motor drive device according to the present disclosure, as the carrier frequency dispersion operation, the arithmetic processor 21 of the controller 20 may adopt the operation including: irregularly selecting at least one PWM cycle for each of all the phases of the brushless DC motor 31; and setting the duty ratio of the PWM signal in the selected PWM cycle of each selected phase to the second duty ratio, which has been increased or decreased from the first duty ratio by a specified value.

### [3. Advantageous Effects and So Forth]

### [3-1. Main advantageous effects and so forth of the present embodiment]

As described above, the motor drive device according to the present embodiment includes the inverter 1 and the compressor 30. The inverter 1 includes the inverter circuit 10, the drive circuit 11, the current detection circuit 12, and the controller 20. The controller 20 includes the arithmetic processor 21, the carrier frequency setter 22, the PWM signal generator 23, and the position detector 24. The compressor 30 includes the brushless DC motor 31. The inverter 1 is connected to the compressor 30 by wire(s) of at least one phase. The DC voltage source 32 supplies a voltage to the inverter 1.

The arithmetic processor 21 calculates a drive voltage for driving the brushless DC motor 31, and determines the duty ratio (first duty ratio) of a PWM signal. The PWM signal generator 23 converts the first duty ratio calculated by the arithmetic processor 21 into a PWM signal at a carrier frequency, and outputs the PWM signal.

Further, in the motor drive device according to the present embodiment, in the above-described configuration, the arithmetic processor 21 irregularly selects at least one PWM cycle in at least one phase from among the phases of the brushless DC motor 31, and calculates a specified value for increasing or decreasing the first duty ratio. The arithmetic processor 21 sets the duty ratio of the PWM signal in the selected cycle in the selected phase to the second duty ratio, which is determined by increasing or decreasing the first duty ratio by a specified value. The PWM signal generator 23 converts the second duty ratio into a PWM signal, and outputs the PWM signal.

As a result, the regularity of the PWM signal is disrupted, and therefore frequency components of a carrier frequency different from a specific carrier frequency are applied to the motor. In this manner, the frequency components of the carrier frequency are dispersed. Therefore, a peak value of noise in the frequency band of the carrier frequency can be reduced.

This carrier frequency dispersion control need not be performed on all the PWM cycles, but may be performed on at least one PWM cycle that is irregularly selected. In addition, since the cycle of the PWM signal does not change, there is no need to change the cycles of controls other than the carrier frequency dispersion control. For example, there is no need to change the cycle of the timing of obtaining the electric current value or the cycle of the timing of the reflection of the voltage command value.

In a conventional configuration in which the carrier frequency is varied, it is necessary to continuously change the setting of a plurality of carrier frequencies. Moreover, since the PWM cycle changes from time to time, the timing of, for example, obtaining the electric current value or the reflection of the voltage command value may need to be adjusted in accordance with a change in the PWM cycle. In such a conventional configuration, arithmetic processing or the control itself tends to become complex. As a result, such a conventional configuration may be difficult to realize with an inexpensive microcomputer having a low processing speed.

In this respect, in the present embodiment, as previously described, even when the carrier frequency dispersion control is performed, there is no need to change the cycles of other controls. Therefore, the control according to the present embodiment can be easily implemented even with an inexpensive microcomputer having a low processing speed.

In addition, in the motor drive device according to the present embodiment, the specified value for increasing or decreasing the first duty ratio may be an irregularly varying value. As a result, compared to a method in which the duty ratio is determined by calculation, more irregular and natural frequency dispersion can be achieved. Consequently, more uniform noise distribution can be realized, and the peak value of noise can be further reduced.

In the motor drive device according to the present embodiment, in each of all the phases, for at least one irregularly selected PWM cycle, the duty ratio may be increased or decreased by the same specified value. Accordingly, since the same voltage increase or decrease is made in each of all the phases, the interphase voltage does not change, and therefore does not affect the motor current generated by the interphase voltage. Consequently, the peak value of noise can be reduced while keeping small the influence of an increase or decrease in the duty ratio on motor control.

### [3-2. One Example of Specific Effects]

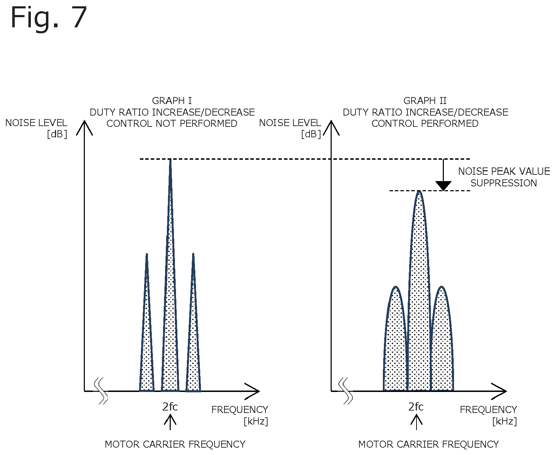

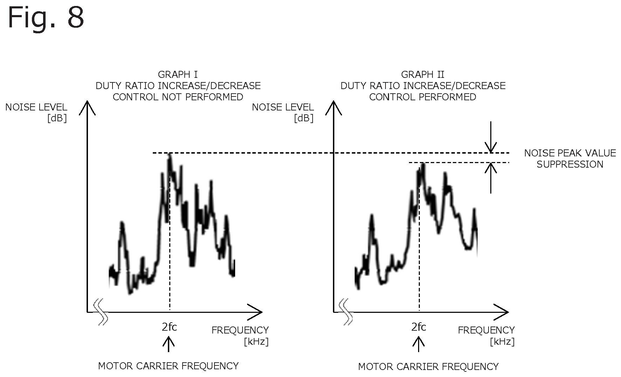

Next, advantageous effects obtained by the motor drive device according to the present embodiment are specifically described with reference to FIG. 7 and FIG. 8.

First, FIG. 7 illustrates a comparison of graphs each schematically showing changes in a noise value when, with all the phases selected, the duty ratio is increased or decreased by the same value in each phase for one irregularly selected PWM cycle.

In the case of sinusoidal drive, when the carrier frequency is fc [kHz], the main frequency component of an interphase voltage applied to the brushless DC motor 31 centers around the motor carrier frequency 2fc [kHz], which is twice the carrier frequency.

Each of the two graphs in FIG. 7 shows noise distribution around the motor carrier frequency, in which the horizontal axis represents a frequency [kHz], and the vertical axis represents a noise level [dB]. In FIG. 7, GRAPH I on the left side is a graph schematically showing changes in the noise value in a case where "no duty ratio increase/decrease control is performed", i.e., a case where the above-described carrier frequency dispersion operation is not performed, whereas GRAPH II on the right side is a graph schematically showing changes in the noise value in a case where "the duty ratio increase/decrease control is performed," i.e., a case where the above-described carrier frequency dispersion operation is performed.

In the case where the duty ratio increase/decrease control is not performed, as schematically shown in GRAPH I, the noise distribution exhibits a sharp peak at the motor carrier frequency 2fc.

On the other hand, in the case where the duty ratio increase/decrease control is performed, the frequency components of the carrier frequency are dispersed by irregularly increasing or decreasing the duty ratio. Accordingly, as schematically shown in GRAPH II, the frequency component around the motor carrier frequency 2fc is also dispersed. Thus, as is clear from the comparison in FIG. 7 between the dashed line of GRAPH I and the dashed line of GRAPH II, the peak value of nose at the motor carrier frequency 2fc can be reduced.

Next, FIG. 8 shows one example of results of measuring actual noise components, i.e., a representative working example of the present disclosure. Similar to FIG. 7, in FIG. 8, GRAPH I on the left side is a graph showing changes in the actual noise measurement value in a case where "no duty ratio increase/decrease control is performed", i.e., a working example case where the above-described carrier frequency dispersion operation is not performed, whereas GRAPH II on the right side is a graph showing changes in the actual noise measurement value in a case where "the duty ratio increase/decrease control is performed," i.e., a working example case where the above-described carrier frequency dispersion operation is performed.

In the working example, similar to the example schematically shown in FIG. 7, for each of all the phases, an increase or decrease in the duty ratio in one irregularly selected PWM cycle is controlled.

In the working example, as shown in FIG. 8, it can be confirmed that, in GRAPH II where "the duty ratio increase/decrease control is performed", the peak value of noise at the motor carrier frequency 2fc is clearly suppressed compared to GRAPH I where "the duty ratio increase/decrease control is not performed". It should be noted that the suppression level in this working example was approximately 4 dB. As described above, the results of the working example shown in FIG. 8 exhibit a tendency similar to that of the schematic model shown in FIG. 7.

It should be noted that the advantageous effects and so forth described above in the present embodiment can be realized by the motor drive device as claimed in the claims of the present disclosure, and of course are not limited to the configurations of, for example, the above-described present embodiment or working example.

### (Other Embodiments or Variations)

The above-described embodiment has been given as an example of the technology disclosed in the present application. However, the technology according to the present disclosure is not limited to this embodiment, but is applicable to other embodiments that are obtained by making modifications, replacements, additions, omissions, etc., to the above-described embodiment. That is, the present disclosure encompasses variations of the above-described embodiment. Further, a new embodiment of the technology according to the present disclosure can be realized by combining multiple components described in the above embodiment.

Specifically, for example, in the above-described embodiment, the circuit current detected by the current detection circuit 12 is used to estimate the rotor position of the brushless DC motor 31. However, the rotor position estimation in the present disclosure can be performed not only based on the circuit current detection by the current detection circuit 12, but also by suitably using a known method. For example, the rotor position may be estimated by using a built-in sensor of the brushless DC motor 31, such as a Hall element.

In the above-described embodiment, electric current detection is performed with a single-shunt configuration using the current detection circuit 12. However, in the present disclosure, the configuration for electric current detection by the current detection circuit 12 is not limited thereto. For example, a three-shunt configuration in which the electric current of each phase is detected may be adopted.

In the above-described embodiment, the motor driven by the motor drive device is the brushless DC motor 31 included in the compressor 30. However, the motor (electric motor) to be driven in the present disclosure is not limited thereto, and may be a motor included in any of various types of known equipment. In the above-described embodiment, the brushless DC motor 31 is a three-phase motor. However, the present disclosure is not limited thereto. The brushless DC motor 31 may be a single-phase, two-phase, four-phase, five-phase, or any other multiphase motor.

### (Additional Remarks)

Based on the above description of the embodiments, the present specification discloses the techniques indicated below.

### (Technique 1)

A motor drive device including: an inverter circuit that converts a direct current into an alternating current; a motor connected to the inverter circuit, the motor having a single phase or a plurality of phases; an arithmetic processor; and a PWM signal generator. The arithmetic processor calculates a drive voltage for driving the motor, and determines a first duty ratio of a PWM signal. The PWM signal generator converts the first duty ratio calculated by the arithmetic processor into the PWM signal at a carrier frequency, and outputs the PWM signal. The arithmetic processor: in a case where the motor has a single phase, selects the single phase and irregularly selects at least one PWM cycle for the single phase, whereas in a case where the motor has a plurality of phases, irregularly selects at least one phase from among the plurality of phases, and irregularly selects at least one PWM cycle for the selected phase; calculates a specified value for increasing or decreasing the first duty ratio; and sets a duty ratio of the PWM signal in the selected PWM cycle in the selected phase to a second duty ratio that is determined by increasing or decreasing the first duty ratio by the specified value. The PWM signal generator converts the second duty ratio into the PWM signal, and outputs the PWM signal.

### (Technique 2)

The motor drive device according to technique 1, wherein the cycle in which the first duty ratio is increased or decreased by the arithmetic processor is irregular, and the specified value calculated by the arithmetic processor is an irregular varying value.

### (Technique 3)

The motor drive device according to technique 1 or 2, wherein for each selected phase, the specified value for increasing or decreasing the first duty ratio, the specified value being calculated by the arithmetic processor, is same within a same PWM cycle.

### (Technique 4)

The motor drive device according to any one of techniques 1 to 3, wherein the arithmetic processor selects all the phases, and applies the specified value for increasing or decreasing the first duty ratio to all the phases.

It should be noted that the present disclosure is not limited to the above-described embodiments. Various modifications can be made to the present disclosure within the scope of the claims for patent. Embodiments obtained by suitably combining technical means that are disclosed in different embodiments and/or variations also fall within the technical scope of the present disclosure.

From the foregoing description, numerous modifications and other embodiments of the present invention are obvious to those skilled in the art. Accordingly, the foregoing description is to be construed as illustrative only, and is provided for the purpose of teaching those skilled in the art the best mode of carrying out the present invention. The structural and/or functional details may be substantially modified without departing from the scope of the present invention.

### Industrial Applicability

The present disclosure is widely and suitably applicable in the field of motor drive devices that drive various types or motors by PWM control and in the field of various types of equipment including motors In particular, the present disclosure is applicable to a motor drive device for driving a motor included in a compressor included in any of various types of refrigerator-freezer equipment (e.g., refrigerators or air conditioners). Therefore, the present disclosure is suitably applicable not only in the field of various equipment including motors, but also in the field of various refrigerator-freezer equipment.

### Reference Signs List

1: inverter
10: inverter circuit
11: drive circuit
12: current detection circuit
20: controller
21: arithmetic processor
22: carrier frequency setter
23: PWM signal generator
24: position detector
30: compressor
31: brushless DC motor
32: DC voltage source

## Claims

1. A motor drive device comprising:
an inverter circuit that converts a direct current into an alternating current;
a motor connected to the inverter circuit, the motor having a single phase or a plurality of phases;
an arithmetic processor; and
a PWM signal generator, wherein
the arithmetic processor calculates a drive voltage for driving the motor, and determines a first duty ratio of a PWM signal,
the PWM signal generator converts the first duty ratio calculated by the arithmetic processor into the PWM signal at a carrier frequency, and outputs the PWM signal,
the arithmetic processor:
in a case where the motor has a single phase, selects the single phase and irregularly selects at least one PWM cycle for the single phase, whereas in a case where the motor has a plurality of phases, irregularly selects at least one phase from among the plurality of phases, and irregularly selects at least one PWM cycle for the selected phase;
calculates a specified value for increasing or decreasing the first duty ratio; and
sets a duty ratio of the PWM signal in the selected PWM cycle in the selected phase to a second duty ratio that is determined by increasing or decreasing the first duty ratio by the specified value, and
the PWM signal generator converts the second duty ratio into the PWM signal, and outputs the PWM signal.

2. The motor drive device according to claim 1, wherein
the cycle in which the first duty ratio is increased or decreased by the arithmetic processor is irregular, and the specified value calculated by the arithmetic processor is an irregular varying value.

3. The motor drive device according to claim 1 or 2, wherein
for each selected phase, the specified value for increasing or decreasing the first duty ratio, the specified value being calculated by the arithmetic processor, is same within a same PWM cycle.

4. The motor drive device according to claim 1 or 2, wherein
the arithmetic processor selects all the phases, and applies the specified value for increasing or decreasing the first duty ratio to all the phases.

5. The motor drive device according to claim 3, wherein
the arithmetic processor selects all the phases, and applies the specified value for increasing or decreasing the first duty ratio to all the phases.
